# EUROPEAN PATENT APPLICATION

(11) **EP 4 475 401 A1**
(43) Date of publication of application: **11.12.2024**
(21) Application number: 23746964.8
(22) Date of filing: 25.01.2023
(51) Int. Cl.: H02K 3/26, H01F 5/04

(54) **COIL SUBSTRATE FOR MOTOR, AND MOTOR**

(30) Priority: 31.01.2022 JP 2022012947
(71) Applicant: IBIDEN CO., LTD., Ogaki-shi, Gifu 503-8604 (JP)
(72) Inventor: HIRASAWA, Takahisa, Ogaki-shi, Gifu 503-8503 (JP); FURUNO, Takayuki, Ogaki-shi, Gifu 503-8503 (JP)
(74) Representative: Hoefer & Partner Patentanwälte mbB
(86) International application number: PCT/JP2023/002176
(87) International publication number: WO 2023/145753

(57) **Abstract**

Provided are a coil substrate for motors with which a motor having stable performance can be obtained and a motor formed by using the coil substrate for motors. The coil substrate for motors is formed by winding a coil substrate N times (N is an integer equal to or larger than 2) in the circumferential direction, the coil substrate comprising a flexible substrate having a first surface and a second surface opposite the first surface; and a plurality of coils formed by first wiring provided on the first surface and second wiring provided on the second surface. The first surface is placed on the inner circumferential side, the second surface is placed on the outer circumferential side, and the N layers, which are formed by winding the coil substrate N times, have a space formed between the M-th layer (M is an integer equal to larger than 1 and smaller than N) and the (M+1)-th layer, the M-th layer and the (M+1)-th layer being counted from the inside.

## Description

### [Technical Field]

The technology disclosed in the present specification relates to a motor coil board, and a motor formed by using the motor coil board.

### [Background Art]

Patent Document 1 describes a coil board comprising a flexible board and spiral-shaped wiring formed on both surfaces of the flexible board. A motor coil board is formed by winding the coil board in a circumferential direction.

### [Prior Art Documents]

### [Patent Documents]

[Patent Document 1] JP 2020-182268 A

### [Summary of the Invention]

### [Problems in Patent Document 1]

In the technology of Patent Document 1, it is feasible that the motor coil board formed by winding the coil board might be formed in a polygonal cylinder shape having a polygonal cross section, rather than a cylindrical shape with a circular cross section. It is therefore feasible that an outer circumferential shape of the coil board will no longer have a uniform thickness. As a result, it is feasible that there will be interference with a magnet which is arranged on the inside when a motor is formed. Furthermore, it is feasible that there will be a reduction in heat dissipation in the motor because a space between the motor coil board and a yoke increases. It is feasible that stable motor performance may not be demonstrated as a result.

### [Means for Solving the Problems]

A motor coil board according to the present invention is formed by winding a coil board N times around (where N is an integer of 2 or more) in a circumferential direction, the coil board comprising: a flexible board having a first face and a second face on the opposite side to the first face; and a plurality of coils formed by means of first wiring provided on the first face and second wiring provided on the second face. The first face is arranged on an inner circumferential side, the second face is arranged on an outer circumferential side, and a space is formed between an Mth layer (where M is an integer of 1 or more and less than N) and an M+1th layer from the inside of N layers formed by winding the coil board N times around.

In the motor coil board according to the present invention, a space is formed between the Mth layer and the M+1th layer. The motor coil board can therefore be formed into a cylindrical shape with a substantially completely circular cross section. Short-circuiting between wiring is suppressed as a result. Furthermore, interference is prevented between the motor coil board and a magnet which is arranged on the inside of the motor coil board when a motor is formed by arranging the motor coil board, the magnet, and a yoke inside a housing. High heat dissipation is further achieved because a space between the motor coil board and the yoke is constant. When a motor is formed by using the coil board according to the present invention, a motor having stable performance can therefore be obtained.

In the motor coil board according to the present invention, the coil board may be wound N times around in the circumferential direction about an axis extending in an orthogonal direction orthogonal to a longitudinal direction of the flexible board, starting from a first end of the flexible board in the longitudinal direction. The flexible board may have a first region in the vicinity of the first end, and a second region next to the first region. The first wiring may be formed within the first region in the vicinity of the first end, and the second wiring need not be formed within the first region.

In the motor coil board according to the present invention, the flexible board may further comprise a third region next to the second region and in the vicinity of a second end on the opposite side to the first end. The second wiring may be formed within the third region. The first wiring need not be formed within the third region.

In the motor coil board according to the present invention, the plurality of coils may each comprise: half-turns of the first wiring formed on the first face; half-turns of the second wiring formed on the second face; and via conductors connecting the first wiring and the second wiring.

A motor according to the present invention is formed by arranging the motor coil board according to the present invention on the inside of a cylindrical yoke, and arranging a rotary shaft and a magnet on the inside of the motor coil board.

Interference between the magnet and the motor coil board is prevented in the motor according to the present invention. Furthermore, high heat dissipation is achieved because the space between the motor coil board and the yoke is constant. A motor having stable performance is obtained.

### [Brief Description of the Drawings]

[Fig. 1] is an oblique view schematically showing a motor coil board according to an embodiment.
[Fig. 2] is a plan view schematically showing a coil board according to an embodiment.
[Fig. 3] is a view in cross section schematically showing the coil board according to an embodiment.
[Fig. 4] is an illustrative diagram in cross section schematically showing a portion of the motor coil board according to an embodiment.
[Fig. 5] is a view in cross section schematically showing a motor according to an embodiment.
[Fig. 6] is a plan view schematically showing a coil board according to a first modified example.
[Fig. 7] is a bottom view schematically showing the coil board according to the first modified example.

### [Embodiment of the Invention]

### [Embodiment]

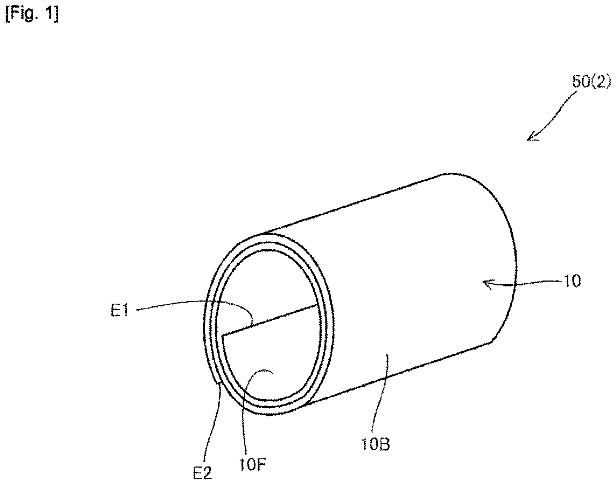

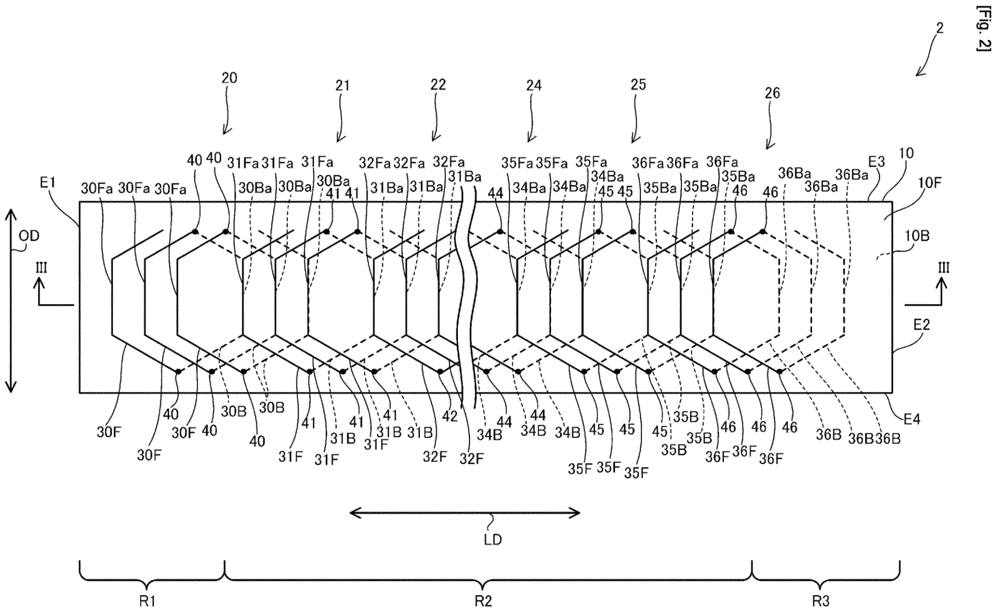

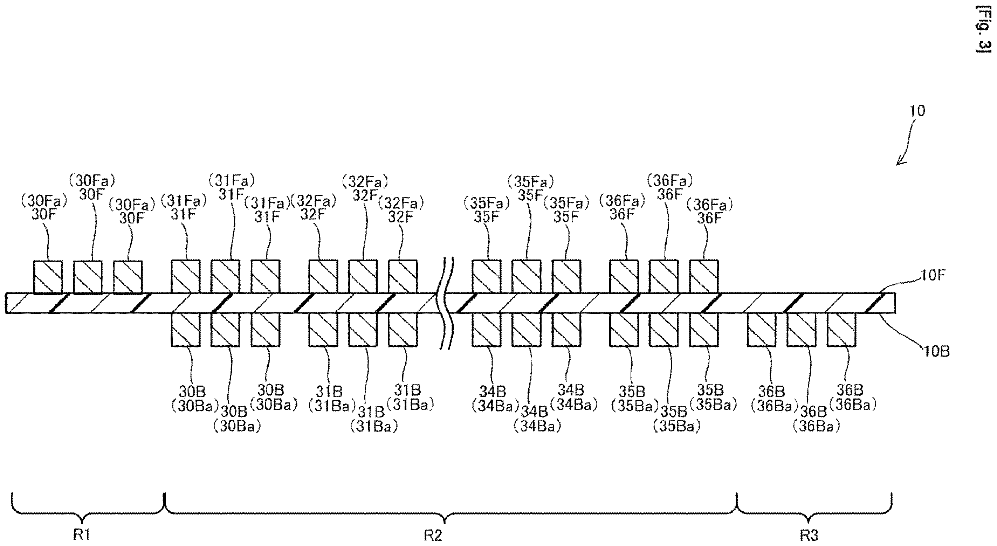

Fig. 1 is an oblique view schematically showing a motor coil board 50 according to an embodiment. The motor coil board 50 is used as a component of a motor. The motor coil board 50 of the embodiment is formed by winding a coil board 2 (see fig. 2 and 3) N times around (where N is an integer of 2 or more) in a cylindrical shape. In the example of fig. 1, the motor coil board 50 is formed by winding the coil board 2 four times around. When wound into a cylindrical shape, the coil board 2 is wound multiple times in the circumferential direction about an axis extending in an orthogonal direction (an axis extending parallel to a first edge E1 (see fig. 2)), starting from the first edge E1. Furthermore, the number of times that the coil board is wound is not particularly limited. A first face 10F of a flexible board 10 of the coil board 2 is arranged on an inner circumferential side, and a second face 10B is arranged on an outer circumferential side when the coil board 2 is wound into a cylindrical shape. A space is formed between an Mth layer (where M is an integer of 1 or more and less than N) and an M+1th layer from the inside of N layers formed by winding the coil board 2 N times around. It should be noted that there is no particular limitation as to the position, size and number of spaces which are formed.

Fig. 2 is a plan view showing the coil board 2. Fig. 3 is a view in the cross section III-III in fig. 2. As shown in fig. 2, the coil board 2 comprises the flexible board 10, and a plurality of coils 20, 21, 22, 24, 25, 26. Fig. 2 shows only the coils 20, 21, 22, 24, 25, 26, but the coil board 2 may also comprise coils other than the coils 20, 21, 22, 24, 25, 26.

The flexible board 10 is a resin board comprising the first face 10F and the second face 10B on the opposite side to the first face 10F. The flexible board 10 is formed by using an insulating resin such as polyimide or polyamide. The flexible board 10 is capable of flexing. The flexible board 10 is formed in a rectangular shape with four edges, which are a first edge E1 to a fourth edge E4. The first edge E1 is a short edge at one end of the flexible board 10 in a longitudinal direction (direction of the arrow LD in fig. 1). The second edge E2 is a short edge at the other end in the longitudinal direction. The first edge E1 and the second edge E2 are both short edges extending along an orthogonal direction (direction of the arrow OD in fig. 1) which is orthogonal to the longitudinal direction. The third edge E3 and the fourth edge E4 are both long edges extending along the longitudinal direction. When the coil board 2 is wound into a cylindrical shape to form the motor coil board 50 (see fig. 1), the first face 10F is arranged on an inner circumferential side and the second face 10B is arranged on an outer circumferential side.

A middle part of the flexible board 10 in the longitudinal direction has been omitted from fig. 2 and 3. The flexible board 10 has a first region R1 in the vicinity of the first edge E1, a second region R2 next to the first region R1, and a third region R3 next to the second region R2 and in the vicinity of the second edge E2. The second region R2 is a region between the first region R1 and the third region R3.

The coils 20, 21, 22, 24, 25, 26 are aligned along the longitudinal direction of the flexible board 10. The coils 20, 21, 22 and the coils 24, 25, 26 may respectively constitute a U phase, V phase and W phase of a three-phase motor. The coils 20, 21, 22, 24, 25, 26 are aligned in that order from the first edge E1 toward the second edge E2. Other coils which are not depicted are provided between the coils 20, 21, 22 and the coils 24, 25, 26. The coils are formed by means of first wiring (see the reference symbols 30F, 31F, etc. in fig. 2) provided on the first face 10F, and second wiring (see the reference symbols 30B, 31B, etc.) provided on the second face 10B.

In order to form the coil 20, first wiring 30F constituting a half turn of one turn is formed on the first face 10F side, second wiring 30B constituting a remaining half turn is formed on the second face 10B side, and adjacent turns are arranged offset from each other. In fig. 2, the coil 20 comprises three turns of wiring. The first wiring 30F and the second wiring 30B constituting each turn are electrically connected through via conductors 40 penetrating the flexible board 10. The first wiring 30F has first orthogonal portions 30Fa extending along the orthogonal direction (see the arrow OD). The second wiring 30B also has second orthogonal portions 30Ba extending along the orthogonal direction. The coil 20 is formed along the first region R1 and the second region R2 of the flexible board 10. The first wiring 30F is formed within the first region R1. The second wiring 30B is not formed within the first region R1. The second wiring 30B is formed within the second region R2.

In the same way, in order to form the coil 21, first wiring 31F constituting a half turn of one turn is formed on the first face 10F side, second wiring 31B constituting a remaining half turn is formed on the second face 10B side, and adjacent turns are arranged offset from each other. The coil 21 comprises three turns of wiring. The first wiring 31F and the second wiring 31B constituting each turn are electrically connected through via conductors 41. The first wiring 31F has first orthogonal portions 31Fa extending along the orthogonal direction (see the arrow OD). The second wiring 31B also has second orthogonal portions 31Ba extending along the orthogonal direction. The whole of the coil 21 is formed within the second region R2 of the flexible board 10. That is to say, the first wiring 31F and the second wiring 31B are formed within the second region R2.

In the same way, the coil 22 also comprises three turns of first wiring 32F and second wiring (not depicted). The first wiring 32F and the second wiring are connected through via conductors 42. The first wiring 32F has first orthogonal portions 32Fa, and the second wiring has second orthogonal portions. The whole of the coil 22 is also formed within the second region R2 of the flexible board 10.

As shown in fig. 2 and 3, the second orthogonal portions 30Ba of the second wiring 30B constituting the coil 20 overlap, through the flexible board 10, the first orthogonal portions 31Fa of the first wiring 31F constituting the adjacent coil 21. The second orthogonal portions 31Ba of the second wiring 31F constituting the coil 21 overlap, through the flexible board 10, the first orthogonal portions 32Fa of the first wiring 32F constituting the adjacent coil 22.

The coil 24 also comprises three turns of first wiring (not depicted) and second wiring 34B. The first wiring and the second wiring 34B are connected through via conductors 44. The first wiring has first orthogonal portions, and the second wiring 34B has second orthogonal portions 34Ba. The whole of the coil 24 is also formed within the second region R2 of the flexible board 10.

The coil 25 also comprises three turns of first wiring 35F and second wiring 35B. The first wiring 35F and the second wiring 35B are connected through via conductors 45. The first wiring 35F has first orthogonal portions 35Fa, and the second wiring 35B has second orthogonal portions 35Ba. The whole of the coil 25 is also formed within the second region R2 of the flexible board 10.

The coil 26 also comprises three turns of first wiring 36F and second wiring 36B. The first wiring 36F and the second wiring 36B are connected through via conductors 46. The first wiring 36F has first orthogonal portions 36Fa, and the second wiring 36B has second orthogonal portions 36Ba. The coil 26 is formed along the second region R2 and the third region R3 of the flexible board 10. The first wiring 36F is formed within the second region R2. The second wiring 36B is formed within the third region R3. The first wiring 36F is not formed within the third region R3.

The second orthogonal portions 34Ba of the second wiring 34B constituting the coil 24 overlap, through the flexible board 10, the first orthogonal portions 35Fa of the first wiring 35B constituting the adjacent coil 25. The second orthogonal portions 35Ba of the second wiring 35B constituting the coil 25 overlap, through the flexible board 10, the first orthogonal portions 36Fa of the first wiring 36F constituting the adjacent coil 26.

The arrangement in fig. 2 and 3 is purely an example. In another modified example, the second orthogonal portions 30Ba of the second wiring 30B constituting the coil 20 need not overlap the first orthogonal portions 31Fa of the first wiring 31F constituting the immediately adjacent coil 21, provided that they overlap the first orthogonal portions of first wiring constituting another coil (e.g., the first orthogonal portions of the first wiring of the coil three along). The same also applies to the coils 21, 22, 24, 25, 26. Whichever configuration is adopted, the first wiring 30F, 31F, etc. is formed within the first region R1, and the second wiring 30B, 31B, etc. should not be formed within the first region R1. The second wiring 36B, 35B, etc. is formed within the third region R3, and the first wiring 36F, 35F, etc. should not be formed within the third region R3.

In a modified example, the first wiring 30F, 31F, etc. is formed within the first region R1, and the second wiring 30B, 31B, etc. may also be formed therein. In another modified example, the first wiring 30F, 31F, etc. is formed within the first region R1, while the second wiring 30B, 31B, etc. need not be formed therein. In a modified example, the second wiring 36B, 35B, etc. is formed within the third region R3, and the first wiring 36F, 35F, etc. may also be formed therein. In another modified example, the second wiring 36B, 35B, etc. is formed within the third region R3, while the first wiring 36F, 35F, etc. need not be formed therein.

The first face 10F and the first wiring 30F, etc. are covered by a resin insulating layer, although this is not shown in the drawings. The second face 10B and the second wiring 30B, etc. are likewise covered by a resin insulating layer.

In this embodiment, the motor coil board 50 in fig. 1 is formed by winding the coil board 2 (fig. 2 and 3) four times around in the circumferential direction starting from the first edge E1. The first face 10F of the flexible board 10 is arranged on the inner circumferential side of the motor coil board 50, and the second face 10B is arranged on the outer circumferential side.

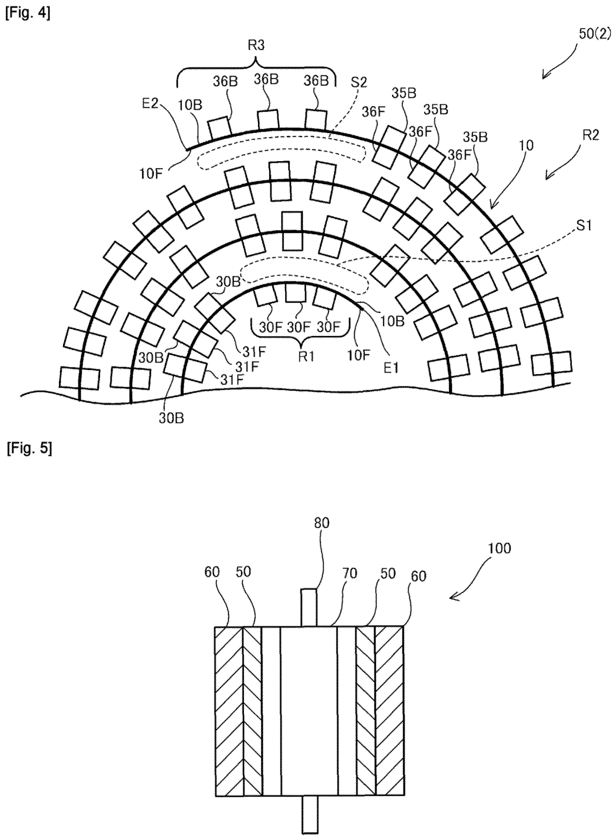

Fig. 4 is an illustrative diagram in cross section schematically showing a portion of the motor coil board 50 in fig. 1. As shown in the drawing, the motor coil board 50 comprises, in succession from the innermost circumference, a first layer, a second layer, a third layer, and a fourth layer. The first region R1 and a portion of the second region R2 form the first layer on the innermost circumference. The second region R2 forms the second and third layers. A portion of the second region R2 and the third region R3 form the fourth layer on the outermost circumference.

As shown in fig. 4, a space S1 is formed between the first layer and the second layer. A space S2 is formed between the third layer and the fourth layer.

The second wiring 30B is not formed on the second face 10B within the first region R1 in the vicinity of the starting end when the coil board 2 is wound, and only the first wiring 30F, which is provided on the first face 10F, is formed in that region. Consequently, there is no wiring arranged on the outer circumferential side (second face 10B side) in the first region R1 part of the first layer on the innermost circumference, and wiring (first wiring 30F) is arranged only on the inner circumferential side (first face 10F side). A region is formed where there is no wiring arranged on the outer circumferential side of the first layer. The space S1 is therefore formed between the first layer and the second layer (i.e., the layer second from the inner circumference) of the flexible board 10 when the second layer is wound on the outside of the first layer. It should be noted that the spaces S1, S2 shown in fig. 4 are both purely exemplary. In a modified example, there is no particular limitation as to the position, size and number of spaces which are formed.

Furthermore, only the second wiring 36B provided on the second face 10B is formed within the third region R3 in the vicinity of the terminal end when the coil board 2 is wound, and the first wiring 36F provided on the first face 10F is not formed in that region. Consequently, there is no wiring arranged on the inner circumferential side (first face 10F side) in the third region R3 part of the fourth layer on the outermost circumference, and wiring (second wiring 36B) is arranged only on the outer circumferential side (second face 10B side). A region is formed where there is no wiring arranged on the inner circumferential side of the fourth layer. The space S2 is therefore formed between the third layer and the fourth layer.

The motor coil board 50 according to this embodiment has the spaces S1, S2 and can therefore be formed into a cylindrical shape with a substantially completely circular cross section.

Fig. 5 is a view in cross section schematically showing a motor 100 employing the motor coil board 50 (fig. 1 and 4) of the embodiment. The motor 100 is formed by arranging the motor coil board 50 on the inside of a yoke 60, and arranging a rotary shaft 80 and a magnet 70, which is fixed to the rotary shaft 80, on the inside of the motor coil board 50.

The configurations of the motor coil board 50 (fig. 1 and 4), the coil board 2 (fig. 2 and 3), and the motor 100 (fig. 5) of the embodiment are as described above. By using the coil board 2 of the embodiment, the motor coil board 50 can be formed into a cylindrical shape with a substantially completely circular cross section. Interference is therefore prevented between the motor coil board 50 and the magnet 70 which is arranged on the inside of the motor coil board 50 when the motor 100 is formed. Furthermore, high heat dissipation is achieved because the space between the motor coil board 50 and the yoke 60 is constant. When the motor 100 is formed by using the coil board 2 of the embodiment, a motor 100 having stable performance can therefore be obtained.

### [First modified example of the embodiment]

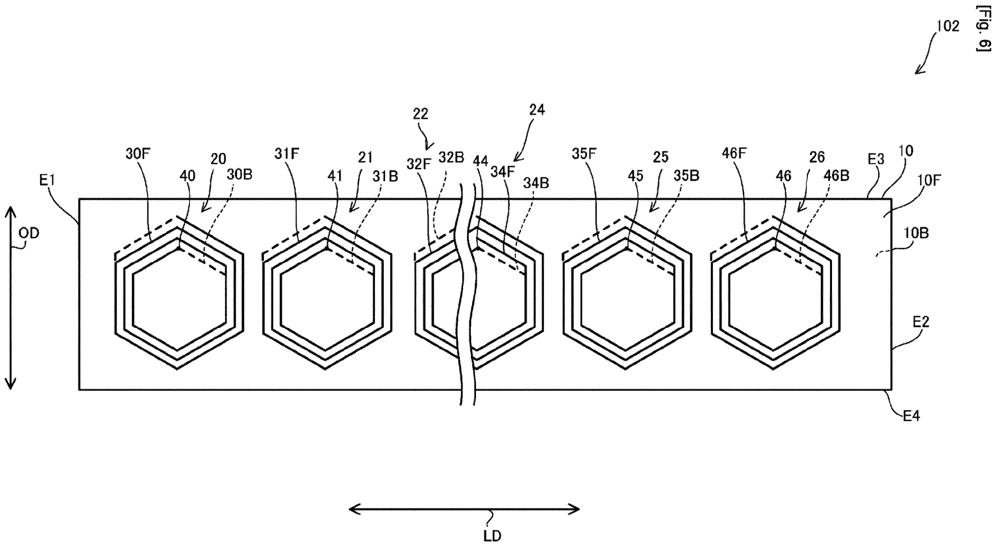

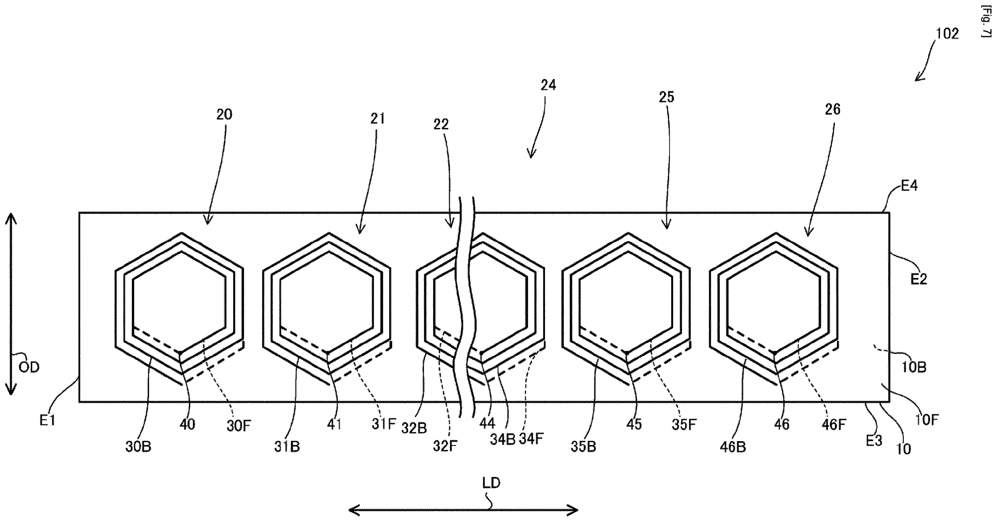

Fig. 6 and 7 show a first modified example of the embodiment. In the first modified example, the arrangement of the wiring constituting the coils 20, 21, 22, 24, 25, 26, etc. differs from that of the embodiment. Fig. 6 is a plan view showing a coil board 102 according to the first modified example. Fig. 7 is a bottom view showing the coil board 102 according to the first modified example. As shown in fig. 6 and 7, the first wiring 30F and the second wiring 30B constituting the coil 20 are formed in a spiral shape (hexagonal spiral shape) in the first modified example. The first wiring 30F and the second wiring 30B are connected through via conductors.

In this case also, a space is formed between an Mth layer (where M is an integer of 1 or more and less than N) and an M+1th layer from the inside of N layers formed by winding the coil board 102 N times around. It should be noted that, in the first modified example, there is no particular limitation as to the position, size and number of spaces which are formed. For example, the motor coil board 50 may be formed by winding the coil board 102 six times around. In that case, a space may be formed between the third and fourth layers from the inside. It should be noted that there is no limitation as to the shape of the coils, provided that they have a spiral shape.

### [Second modified example of the embodiment]

The first wiring 30F and the second wiring 30B constituting the coil 20 are formed in a spiral shape (hexagonal spiral shape) in the coil board 2 of the second modified example, although this is not shown in the drawings. The first wiring 30F and the second wiring 30B are connected through via conductors. The first wiring 30F and the second wiring 30B are arranged with an offset. The coils 21, 22, 24, 25, 26, etc. also have the same configuration.

In the second modified example also, the first wiring (wiring on the first face 10F side) is formed within the first region R1, and the second wiring (wiring on the second face 10B side) is not formed within the first region R1. The second wiring is formed within the third region R3, and the first wiring is not formed within the third region R3.

Consequently, when the motor coil board 50 is formed by winding the coil board 2 of the second modified example also, there is no wiring arranged on the outer circumferential side (second face 10B side) in the first region R1 part of the first layer, and wiring (first wiring) is arranged only on the inner circumferential side (first face 10F side). A region is formed where there is no wiring arranged on the outer circumferential side of the first layer. A space is therefore formed between the first layer and the second layer when the second layer of the flexible board 10 is wound on the outside of the first layer. Furthermore, there is no wiring arranged on the inner circumferential side (first face 10F side) in the third region R3 part of the fourth layer on the outermost circumference, and wiring (second wiring) is arranged only on the outer circumferential side (first face 10B side). A region is formed where there is no wiring arranged on the inner circumferential side of the fourth layer. A space is therefore also formed between the third layer and the fourth layer. The motor coil board 50 can be formed into a cylindrical shape with a substantially completely circular cross section.

In this case also, a space is formed between an Mth layer (where M is an integer of 1 or more and less than N) and an M+1th layer from the inside of N layers formed by winding the coil board 2 N times around. It should be noted that, in the second modified example, there is no particular limitation as to the position, size and number of spaces which are formed. For example, the motor coil board 50 may be formed by winding the coil board 2 ten times around. In that case, a space may be formed between the third and fourth layers or between the seventh and eighth layers from the inside. It should be noted that there is no limitation as to the shape of the coils, provided that they have a spiral shape.

### [Third modified example of the embodiment]

The arrangement of the coils in the third modified example is the same as that of the embodiment, and the motor coil board 50 is formed by winding the coil board 2 N times around (where N is an integer of 2 or more). In this case also, a space is formed between an Mth layer (where M is an integer of 1 or more and less than N) and an M+1th layer from the inside of N layers formed by winding the coil board 2 N times around. It should be noted that, in the third modified example, there is no particular limitation as to the position, size and number of spaces which are formed. For example, the motor coil board 50 may be formed by winding the coil board 2 ten times around. In that case, spaces may be formed between the first and second layers and between the ninth and tenth layers from the inside.

### [Key to Symbols]

2, 102: Coil board
10: Flexible board
10F: First face
10B: Second face
20, 21, 22, 24, 25, 26: Coil
30F, 31F, 32F, 34F, 35F, 36F: First wiring
30Fa, 31Fa, 32Fa, 34Fa, 35Fa, 36Fa: First orthogonal portion
30B, 31B, 32B, 34B, 35B, 36B: Second wiring
30Ba, 31Ba, 32Ba, 34Ba, 35Ba, 36Ba: Second orthogonal portion
50: Motor coil board
60: Yoke
70: Magnet
80: Rotary shaft
100: Motor
R1: First region
R2: Second region
R3: Third region
S1, S2: Space

## Claims

1. A motor coil board formed by winding a coil board N times around (where N is an integer of 2 or more) in a circumferential direction, the coil board comprising: a flexible board having a first face and a second face on the opposite side to the first face; and a plurality of coils formed by means of first wiring provided on the first face and second wiring provided on the second face, wherein
the first face is arranged on an inner circumferential side, and the second face is arranged on an outer circumferential side, and
a space is formed between an Mth layer (where M is an integer of 1 or more and less than N) and an M+1th layer from the inside of N layers formed by winding the coil board N times around.

2. The motor coil board of claim 1, wherein
the coil board is wound N times around in the circumferential direction about an axis extending in an orthogonal direction orthogonal to a longitudinal direction of the flexible board, starting from a first end of the flexible board in the longitudinal direction,
the flexible board has a first region in the vicinity of the first end, and a second region next to the first region, and
the first wiring is formed within the first region in the vicinity of the first end, and the second wiring is not formed within the first region.

3. The motor coil board of claim 2, wherein the flexible board further comprises a third region next to the second region and in the vicinity of a second end on the opposite side to the first end, the second wiring is formed within the third region, and the first wiring is not formed within the third region.

4. The motor coil board of claim 1, wherein the plurality of coils each comprise: half-turns of the first wiring formed on the first face; half-turns of the second wiring formed on the second face; and via conductors connecting the first wiring and the second wiring.

5. A motor which is formed by arranging the motor coil board of claim 1 on the inside of a cylindrical yoke, and arranging a rotary shaft and a magnet on the inside of the motor coil board.
